# EUROPEAN PATENT APPLICATION

(11) **EP 4 737 116 A1**
(43) Date of publication of application: **06.05.2026**
(21) Application number: 24831818.0
(22) Date of filing: 20.06.2024
(51) Int. Cl.: B32B 25/08, B32B 25/20, B32B 27/36, C09J 5/02

(54) **LAMINATE AND PRODUCTION METHOD THEREFOR**

(30) Priority: 28.06.2023 JP 2023105835
(71) Applicant: NOK Corporation, Minato-ku Tokyo 105-8585 (JP)
(72) Inventor: YOSHITOMI, Takumi, Fujisawa-shi, Kanagawa 251-0042 (JP); FUTASHIMA, Ryo, Fujisawa-shi, Kanagawa 251-0042 (JP); YOSHIDA, Shizuki, Fujisawa-shi, Kanagawa 251-0042 (JP)
(74) Representative: TBK
(86) International application number: PCT/JP2024/022372
(87) International publication number: WO 2025/004956

(57) **Abstract**

A laminate structure includes: a first member formed from a silicone rubber; a second member formed from a polycarbonate; and a bonding layer formed from a silane coupling agent containing a glycidyl group, the bonding layer bonding the first member to the second member.

## Description

### TECHNICAL FIELD

This invention relates to a technique for bonding members together.

### BACKGROUND ART

A technique is known for bonding together members made of different materials using a silane coupling agent. For example, Patent Document 1 discloses bonding a sheet formed from a silicone rubber to a sheet formed from a resin material or a metal material using a single type of silane coupling agent.

### Related Art Document

### Patent Document

Patent Document 1: Japanese Patent Application Laid-Open Publication No. 2014-62224.

### SUMMARY OF THE INVENTION

### Problems to be solved by the invention

In bonding a sheet formed from a silicone rubber to a sheet formed from a resin material, it is important to improve a durability of the bond by use of a simplified process. In view of the above-described circumstances, an aspect of this disclosure is to improve a durability of a bond between a first member and a second member while using a simplified process to manufacture a laminate structure.

### Means for solving the problems

A laminate structure, according to an aspect of this invention, includes: a first member formed from a silicone rubber; a second member formed from a polycarbonate; and a bonding layer formed from a silane coupling agent containing a glycidyl group, the bonding layer bonding the first member to the second member.

A method for manufacturing a laminate structure, according to an aspect of this invention, includes: an application step of applying a bonding material composed of a silane coupling agent containing a glycidyl group to: a first surface of a first member formed from a silicone rubber; and a second surface of a second member formed from a polycarbonate; and a bonding step of bonding the first surface of the first member to the second surface of the second member using the bonding material.

### Effect of the Invention

According to this invention, durability of the bond between the first member and the second member is improved while a process for manufacturing a laminate structure is simplified.

### BRIEF DESCRIPTION OF THE DRAWINGS

FIG. 1 is a cross-sectional view of a laminate structure according to an embodiment.
FIG. 2 is a diagram showing a process of manufacturing the laminate structure.
FIG. 3 is a table showing results of evaluation of peeling between a first member and a second member.

### MODES FOR CARRYING OUT THE INVENTION

### A: Laminate structure

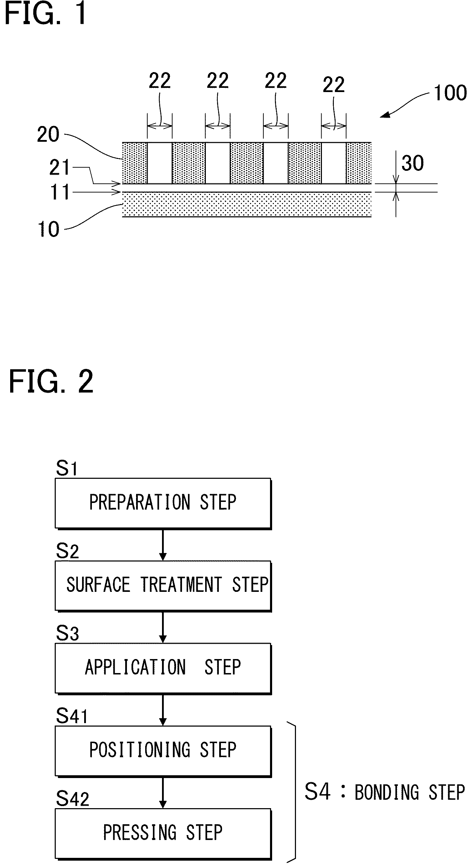

FIG. 1 is a cross-sectional view of a laminate structure 100 according to an aspect of this disclosure. In this embodiment, the laminate structure 100 is a well plate for use in culturing a variety of cells (specifically, spheroids), and includes a first member 10, a second member 20, and a bonding layer 30.

The first member 10 is a thin plate-shaped molded structure formed from a silicone rubber. The first member 10 is primarily composed of a silicone rubber. An example of the silicone rubber is polydimethylsiloxane (PDMS). The first member 10 has a first surface 11. Fine recesses (not shown) are provided in the first surface 11. In one example, each of the fine recesses is generally hemispherical in shape and has a diameter of about 1mm.

The second member 20 is a thin plate-shaped molded structure formed from a polycarbonate (PC). The first member 10 is primarily composed of a polycarbonate. Thus, the first member 10 and the second member 20 are formed from different types of resin materials. The external dimensions of the first member 10 are substantially the same as those of the second member 20. The second member 20 has a second surface 21. The first surface 11 of the first member 10 faces the second surface 21 of the second member 20.

Circular holes (openings) 22 arranged in a matrix pattern are provided in the second member 20. A diameter each of the circular holes 22 is sufficiently larger than that each of the recesses provided in the first surface 11. Cells for culture are housed in a space within respective ones of each of the circular holes 22. The first surface 11 of the first member 10 serves as the bottom surface.

The bonding layer 30 is interposed between the first member 10 and the second member 20. The bonding layer 30 is formed from a bonding material and bonds the first surface 11 to the second surface 21. The bonding material used to form the bonding layer 30 is a silane coupling agent containing a glycidyl group as a functional group. For example, 3-Glycidoxypropyltrimethoxysilane can be used as the bonding material for the bonding layer 30. Alternatively, other silane coupling agents, such as 3-Glycidyloxypropylmethyldiethoxysilane or 3-Glycidoxypropylmethyldimethoxysilane, can be used as the bonding material 30.

In the above configuration, the silicone rubber (particularly polydimethylsiloxane) used as the material for the first member 10 is highly permeable to oxygen. Since oxygen readily permeates through the first member 10, cells cultured within the laminate structure 100 are able to respire similarly to a living organism. On the other hand, the polycarbonate used as the material for the second member 20 has superior heat resistance compared to other resin materials, such as polystyrene. Accordingly, deformation of the second member 20 is prevented under heating during the process for manufacturing the laminate structure 100 and under other conditions that involve heating. Superior heat resistance of the second member 20 also avoids issues such as defocusing during microscopic observation of cultured cells, which would otherwise occur as a result of thermal deformation of the laminate structure 100. Thus, according to this embodiment, effective respiration of the cultured cells and suppression of heat deformation of the laminate structure 100 are achieved.

### B: Method for Manufacturing Laminate Structure 100

FIG. 2 is a process diagram showing steps for manufacturing the laminate structure 100. As shown in FIG. 2, the process of manufacturing the laminate structure 100 includes a preparation step S1, a surface treatment step S2, an application step S3, and a bonding step S4.

In the preparation step S1, a bonding material for use in forming the bonding layer 30 is prepared. In the preparation step S1, a bonding material composed of a silane coupling agent containing a glycidyl functional group is prepared.

Specifically, the silane coupling agent containing the glycidyl functional group is mixed with a solvent to produce the bonding material. The solvent may be a solution of ethanol and water mixed at a a ratio of 9:1, or a solution of isopropyl alcohol (IPA) and water mixed at the same ratio. It is of note that the type of the solvent is not limited to these examples. In the preparation step S1, the bonding material is prepared by mixing the silane coupling agent containing the glycidyl group with the solvent at a concentration within a range from 1 wt % to 10 wt %.

After the preparation step S1, the surface treatment step S2 is performed. In the surface treatment step S2, the first surface 11 of the first member 10 and the second surface 21 of the second member 20 are activated by being irradiated with light. More specifically, in the surface treatment step S2, the first surface 11 and the second surface 21 are irradiated with excimer light (Vacuum Ultraviolet Light).

For example, the first surface 11 is irradiated with excimer light for approximately 15 seconds, and the second surface 21 is irradiated with excimer light for approximately 30 seconds. Thus, the duration of the irradiation of the second surface 21 is longer than that of the first surface 11. However, durations of irradiation are not limited thereto. Moreover, the surface treatment step S2 may be omitted.

After completion of the surface treatment step S2, the application step S3 is performed. In the application step S3, the bonding material prepared in the preparation step S1 is applied to the first surface 11 of the first member 10 and to the second surface 21 of the second member 20. A tool such as a brush, spray, or roller, may be used to apply the bonding material. Alternatively, the bonding material may be applied to the first surface 11 and the second surface 21 by immersing the first member 10 and to the second member 20 in the bonding material.

As will be apparent from the description, the same bonding material is applied to the first surface 11 of the first member 10 and to the second surface 21 of the second member 20. Specifically, a silane coupling agent containing a glycidyl group is applied to the first surface 11 and to the second surface 21.

After completion of the application step S3, the bonding step S4 is performed. For example, the bonding step S4 is commenced at least five minutes after the completion of application step S3. In the bonding step S4, the first member 10 is bonded to the second member 20 using the bonding material applied during the application step S3. That is, the bonding layer 30, which bonds the first member 10 and the second member 20, is formed from the bonding material on the first surface 11 and from the bonding material on the second surface 21. The bonding step S4 also includes a positioning step S41 and a pressing step S42.

In the positioning step S41, the first member 10 and the second member 20 are positioned such that the bonding material on the first surface 11 comes into contact with the bonding material on the second surface 21. During the positioning step S41, excess solution on the first surface 11 and on the second surface 21 is removed by being blown with air. Any bubbles introduced into the bonding material are eradicated, thus ensuring that the bonding materials on the first surface 11 and on the second surface 21 are brought into close contact without any gaps therebetween.

In the pressing step S42, the first member 10 is bonded to the second member 20 by pressing the two members together while applying heat. Specifically, the first member 10 and the second member 20 are heated to a predetermined temperature in a range from 80 °C to 90°C and are pressed together under a pressure in a range of from 0.002 MPa to 1.2 MPa. Pressure is applied for a duration of approximately 15 minutes. As a result of the pressing step S42, the bonding material on the first surface 11 adheres to the bonding material on the second surface 21, and the adhered bonding materials cure to form the bonding layer 30.

As described above, the polycarbonate used as the material for the second member 20 has high heat resistance. Thus, in contrast to a resin material such as polystyrene for use in formation of the second member 20, deformation of the laminate structure 100 under heating during the pressing step S42 is suppressed effectively.

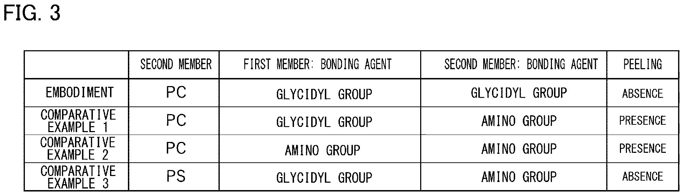

FIG. 3 shows results of evaluating the bonding strength between the first member 10 and the second member 20 across multiple samples, with each sample including different combinations of materials used to manufacture the laminate structure 100. The results of bonding strength, as indicated by a presence or absence of peeling between the first member 10 and the second member 20, are shown in FIG. 3. In each sample shown in FIG. 3, the same manufacturing conditions and type of solvent as described in this embodiment were used.

The glycidyl group shown in FIG. 3 refers to a silane coupling agent containing a glycidyl functional group. Specifically, the glycidyl group is 3-glycidoxypropyltrimethoxysilane (product code: DOWSIL Z6040), manufactured by Dow Co., Ltd. Similarly, the amino group shown in FIG. 3 refers to a silane coupling agent containing an amino functional group. Specifically, the amino group is 3-aminopropyltrimethoxysilane (product code: A0439), manufactured by Tokyo Chemical Industry Co., Ltd.

In Comparative Examples 1 and 2, samples were used in which the first member 10 was formed from a silicone rubber and the second member 20 was formed from polycarbonate (PC), as in this embodiment. In Comparative Example 1, a silane coupling agent containing a glycidyl group was applied to the first surface 11, while a silane coupling agent containing an amino group was applied to the second surface 21. In Comparative Example 2, a silane coupling agent containing an amino group was applied to both the first surface 11 and the second surface 21.

In Comparative Examples 1 and 2, peeling was observed between the first member 10 and the second member 20. In contrast to Comparative Examples 1 and 2, in this embodiment no peeling occurred between the first member 10 and the second member 20. Thus, this embodiment provides improved durability of the bond between the first member 10 and the second member 20. By enhancing the bonding strength through the bonding layer 30, moisture ingress is suppressed, and thus a water resistance of the laminate structure 100 is enhanced.

In Comparative Example 3 shown in FIG. 3, a sample was used in which the first member 10 was formed from a silicone rubber and the second member 20 was formed from polystyrene (PS). In Comparative Example 3, a silane coupling agent containing a glycidyl group was applied to the first surface 11, while a silane coupling agent containing an amino group was applied to the second surface 21.

In Comparative Example 3, no peeling was observed between the first member 10 and the second member 20. Accordingly, with respect to improving the durability of the bond between the first member 10 and the second member 20, this embodiment is equivalent to Comparative Example 3. However, in Comparative Example 3, two different types of bonding agents are used, whereas in this embodiment uses only one type of silane coupling agent containing a glycidyl group is used to bond the first member 10 and the second member 20. Accordingly, compared to Comparative Example 3, this embodiment allows for a simplified manufacturing process (i.e., the process of bonding the first member 10 and the second member 20). Specifically, in the preparation step S1, there is no need to prepare two different types of bonding agents.

As will be apparent from the foregoing description, this embodiment provides improved durability of the bond between the first member 10 and the second member 20, while using a simplified process for manufacturing the laminate structure 100.

Patent Document 1 discloses that it is necessary to perform a corona discharge treatment, ultraviolet irradiation, or plasma treatment both before and after application of a bonding material containing a silane coupling agent. In contrast to the technique disclosed in Patent Document 1, this embodiment enables a strong and durable bond to be formed between the first member 10 and the second member 20 by activating the first surface 11 and the second surface 21 with excimer light prior to application of the bonding material. That is, post-application activation of the first surface 11 and the second surface 21 is not required. Accordingly, this embodiment also provides an advantage in that a process used for manufacturing the laminate structure 100 is simplified compared to the technique disclosed in Patent Document 1.

### C: Modifications

Specific modifications of the foregoing embodiment are described below. Two or more aspects selected from the following modifications may be combined, as long as such combination does not give rise to any contradiction.
(1) The order of irradiating the first member 10 with the excimer light (S2) and then applying the bonding material (S3), and irradiating the second member 20 with excimer light (S2) and then applying the bonding material (S3), can be changed. For example, the processing of the first member 10 and the processing of the second member 20 may be carried out sequentially, or part or all of the processing of the first member 10 and part or all of the processing of the second member 20 may be performed in parallel.
(2) In the foregoing embodiment, a well plate used for cell culture is described as an example of the laminate structure 100; however, the application of laminate structure 100 is not limited thereto. Further, the shape and dimensions of the first member 10 and the second member 20 can be modified upon need depending on an application of the laminate structure 100. For example, the holes 22 need not necessarily be provided.
(3) The terms "first" and "second" as used herein are merely formal and convenient labels to distinguish elements from one another, and do not have any substantial meaning. Specifically, the terms "first" and "second" do not designate a position of each element or an order of manufacture. Accordingly, no restrictive interpretation is implied or can be made such that a step designated "first" necessarily precedes a step designated "second."

### D: Appendices

The following configuration is understood from the foregoing embodiment.

A laminate structure, according to an aspect (aspect 1) of this disclosure, includes: a first member that is formed from a silicone rubber; a second member that is formed from polycarbonate; and a bonding layer that is formed from a silane coupling agent containing a glycidyl group and bonds the first member to the second member.

The durability of the bond between the first member and the second member is improved compared to when the first member is bonded to the second member using a bonding material with a silane coupling agent containing an amino group. Further, compared to a case in which a different type of silane coupling agent is applied to the first member and to the second member, , the process of manufacturing the laminate structure can be simplified.

A method for manufacturing a laminate structure, according to an aspect (aspect 2) of this disclosure, includes: an application step that applies a bonding material with a silane coupling agent containing a glycidyl group to: a first surface of a first member that is formed from a silicone rubber; and a second surface of a second member that is formed from polycarbonate; and a bonding step that bonds the first surface of the first member to the second surface of the second member, using the bonding material.

According to this aspect, for the same reason as in Aspect 1, the durability of the bond between the first member and the second member is improved while the process for manufacturing the laminate structure is simplified.

In an example (Aspect 3) according to Aspect 2, the method further includes a preparation step that prepares the silane coupling agent containing the glycidyl group before performance of the application step.

Further, in an example (Aspect 5) according to Aspect 3 or 4, the method further comprising a surface treatment step between the preparation step and the application step, in which the surface treatment step activates, using photoirradiation, the first surface and the second surface.

### Description of Reference Signs

100... laminate structure, 10... first member, 11... first surface, 20... second member, 21... second surface, 22... hole, and 30... bonding layer.

## Claims

1. A laminate structure comprising:
a first member formed from a silicone rubber;
a second member formed from a polycarbonate; and
a bonding layer formed from a silane coupling agent containing a glycidyl group, the bonding layer bonding the first member to the second member.

2. A method for manufacturing a laminate structure, the method comprising:
an application step of applying a bonding material composed of a silane coupling agent containing a glycidyl group to:
a first surface of a first member formed from a silicone rubber; and
a second surface of a second member formed from a polycarbonate; and
a bonding step of bonding the first surface of the first member to the second surface of the second member using the bonding material.

3. The method for manufacturing the laminate structure according to claim 2, the method further comprising a preparation step of preparing the silane coupling agent containing the glycidyl group before performing the application step.

4. The method for manufacturing the laminate structure according to claim 3,
wherein the preparation step includes preparing the bonding material by mixing the silane coupling agent containing the glycidyl group with a solvent at a concentration within a range from 1 wt % to 10 wt %.

5. The method for manufacturing the laminate structure according to claim 3 or claim 4, the method further comprising a surface treatment step performed between the preparation step and the application step, wherein the first surface and the second surface are activated by being irradiated with light.
